# EUROPÄISCHE PATENTSCHRIFT

(11) **EP 1 348 585 B1**
(45) Veröffentlichungstag und Bekanntmachung des Hinweises auf die Patenterteilung: **01.08.2007**
(21) Anmeldenummer: 03006828.2
(22) Anmeldetag: 27.03.2003
(51) Int. Cl.: B60J 7/02, B60J 7/043, B60J 10/12

(54) **Verfahrbarer Deckel für Fahrzeugdach sowie Schiebehebedach-Modul**
Displaceable panel for vehicle roof and sliding roof module
Panneau déplaçable pour toit de véhicule et module pour toit coulissant

(30) Priorität: 27.03.2002 DE 10213994
(43) Veröffentlichungstag der Anmeldung: 01.10.2003
(73) Patentinhaber: ArvinMeritor GmbH, 63128 Dietzenbach (DE)
(72) Erfinder: Böhm, Horst, 60599 Frankfurt / Main (DE); Grimm, Rainer, 60599 Frankfurt / Main (DE)
(74) Vertreter: Kitzhofer, Thomas

(56) Entgegenhaltungen:
- DE-A- 4 308 221
- DE-A- 10 036 816
- DE-A- 19 808 113
- DE-A- 19 921 181
- DE-C- 10 036 630
- DE-C- 19 911 811
- DE-C- 19 918 150

## Beschreibung

Die Erfindung betrifft einen verfahrbaren Deckel nach dem Oberbegriff des Anspruchs 1.

Darüber hinaus betrifft die Erfindung ein Schiebehebedach-Modul, mit einem erfindungsgemäßen Deckel und einem am Fahrzeugdach stationär zu befestigenden Führungsrahmen und einem dachseitigen Verstärkungsrahmen.

Die gattungsbildende DE 198 08 113 A1 zeigt ein Schiebedach mit einem Glasdeckel. Am Außenrand des Glasdeckels ist ein geschäumter oder gespritzter Kunststoffrahmen vorgesehen. Winkelbleche, die der Befestigung eines Antriebsmechanismus des Glasdeckels dienen, sind in dem geschäumten oder gespritzten Kunststoffrahmen vorgesehen.

Ein Deckel ist aus der DE 43 21 915 C1 bekannt. Dieser Deckel weist an seiner Unterseite einen an die Hinterschäumung angrenzenden Deckelträger auf, an dem voraussichtlich eine Längsführung in Form einer Kulisse befestigt ist.

Ferner ist in EP 0 551 841 A1 eine Führung für einen Deckel zum Schließen einer Fahrzeugdachöffnung gezeigt, die an der Unterseite des Deckels durch Kleben befestigt ist.

Diese Konstruktion soll erfindungsgemäß vereinfacht werden und zu einem günstigeren, einfacher zu montierenden, aber dennoch sehr stabilen Deckel führen.

Vorstehende Aufgabe wird bei einem verfahrbaren Deckel der eingangs genannten Art durch die Merkmale des Anspruchs 1 gelöst.

Während bei bislang bekannten Deckeln rückseitige Verstärkungen zur Erhöhung der Stabilität des Deckels vorgesehen waren, an denen wiederum über Schraubverbindungen die seitlichen Längsführungen befestigt waren, sieht die Erfindung vor, die Führung in die Hinterschäumung einzubetten, so daß keine zusätzliche Montage der Führung an einem rückseitigen Rahmen notwendig ist. Die Führung wird einfach in die Schaumform eingelegt und dort positioniert, um durch das Hinterschäumen integraler Bestandteil des Deckels zu werden. Ein weiterer wichtiger Vorteil des erfindungsgemäßen Deckels besteht darin, daß die Führung, indem sie in die Hinterschäumung eingebettet ist, eine Art Verstärkungseinlage bildet und damit die Stabilität des Deckels erhöht. Der bislang vorgesehene Rahmen kann schwächer ausgebildet sein oder ganz entfallen. Die bevorzugte Ausführungsform sieht sogar vor, daß die Führung, vorzugsweise als Längsführung ausgeführt, Teil des Rahmens ist, so daß die Anzahl der zur Herstellung des Deckels notwendigen Teile im Vergleich zum Stand der Technik deutlich reduziert werden kann. Bei kleinen Deckeln kann es sogar ausreichen, an den Seiten des Paneels nur die zwei Längsführungen vorzusehen, die allein, ohne zusätzliche Streben, die Verstärkung bilden.

Zusätzlich zur Einschäumung kann die Führung rückseitig auch unmittelbar mit dem Paneel verbunden sein, um mit diesem eine Einheit zu bilden. Auch hier wird die Stabilität des Deckels durch die Führung erhöht, und eine aufwendige Montage über Schrauben-Muttern-Verbindungen mit dem Rahmen kann entfallen.

Die unmittelbare Anbringung der Führung am Paneel kann beispielsweise durch ein rückseitiges Aufkleben der Führung an das Paneel erfolgen. Ist der Deckel aus Kunststoff, können andere günstige Verbindungsarten gewählt werden. Beispielsweise kann das Paneel durch Spritzgießen hergestellt werden, so daß die Führung bei der Herstellung des Paneels teilweise umspritzt und damit in das Paneel eingebettet wird. Aber auch eine Thermovernietung ist möglich, indem rückseitig vom Paneel Kunststoffdome abstehen, die durch Temperatureinwirkung verformt werden. Auch ein unmittelbares Anschrauben der Führung an das Paneel oder eine Rast- oder Klipp-Verbindung wäre denkbar.

Die Hinterschäumung kann natürlich auch bis zur Oberseite, d.h. Außenseite des Paneels verlaufen. Zu betonen ist auch, daß die Führung nicht zwingend eine Längsführung sein muß. Der erfindungsgemäße Deckel kann auch nur ausstellbar sein, wobei die in diesem Fall vorgesehene Führung die Ausstellbewegung ermöglicht.

Natürlich ist auch eine Kombination der unmittelbaren Befestigung am Paneel und der Einbettung in die Hinterschäumung möglich, indem beispielsweise die Führung rückseitig an das Paneel angeklebt und beim anschließenden Schäumungsvorgang zusätzlich noch in die Hinterschäumung eingebettet wird

Wenn die Führung als Längsführung in Form einer Kulissenführung ausgebildet ist, ist ein eine Bahn aufweisendes Kulissenteil vorgesehen und ein längs dieser Bahn relativ dazu bewegliches Verschiebeteil. Entweder das Kulissenteil oder das Verschiebeteil ist dann in die Hinterschäumung eingebettet und/oder rückseitig am Paneel befestigt, um die Längsführung zu bilden. Vorzugsweise ist das mit dem Deckel starr verbundene Teil das langgestreckte Kulissenteil, damit dieses mindestens abschnittsweise die Funktion der Verstärkung gleichzeitig miterfüllen kann.

Ein längs des Deckelrandes verlaufender Rahmen kann an den Seitenrändern des Paneels verlaufende Längsführungen und wenigstens zwei quer zu den Längsführungen verlaufende Querstreben aufweisen. Der Rahmen kann durch die Querstreben längs des Deckelrandes geschlossen umlaufend ausgeführt sein, was seine Stabilität deutlich erhöht. Wie erwähnt können die Längsführungen bei kleinen Deckeln auch die einzigen Verstärkungen bilden.

Das erfindungsgemäße Schiebehebedach-Modul der eingangs genannten Art ist durch einen Justiermechanismus gekennzeichnet, mit einer Schrauben-Muttern-Verbindung, wobei Schraube oder Mutter am Führungsrahmen oder am dachseitigen Verstärkungsrahmen durch eine Steckverbindung drehfest angebracht ist. Die Steckverbindung erlaubt eine schnelle, positionssichere Arretierung der Schraube oder der Mutter, so daß die Montage beschleunigt wird. Der Justiermechanismus, wie er auch im folgenden noch detaillierter beschrieben wird, ist jedoch nicht nur auf die Justage des Führungsrahmens eines Schiebehebedach-Moduls beschränkt, sondern kann selbstverständlich auch zur Justage eines gesamten Dachmoduls verwendet werden, das vor allem in der Höhe zu den angrenzenden, karossenfesten Abschnitten exakt ausgerichtet werden muß.

Der Justiermechanismus umfaßt bevorzugt eine Klammer, in der die Schraube oder die Mutter aufgenommen ist.

Diese Klammer kann beispielsweise an einen Rand des Führungsrahmens oder Verstärkungsrahmens geklemmt werden, z.B. den Rand des Führungsrahmens umgreifen. Die Klammer samt der Schraube oder Mutter muß deshalb nur von oben auf den Rand aufgesteckt werden.

Vorzugsweise weist der Rand einen der Klammer angepaßten Versatz auf (z.B. einen Vorsprung oder eine Ausnehmung), mittels dem ein Verdrehen der Klammer verhindert wird. Ein Verdrehen der Klammer wird auch durch die Anlage von Klemmfingern am Randabschluß des Führungs- oder Verstärkungsrahmens verhindert.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch ein erfindungsgemäßes Schiebehebedach-Modul und den dabei vorgesehenen erfindungsgemäßen Deckel im im Fahrzeug eingebauten Zustand,
- Figur 2 eine Querschnittsansicht durch das erfindungsgemäße Schiebehebedach-Modul im Bereich einer Längsführung, in eingebautem Zustand,
- Figur 3 eine Explosionsansicht des erfindungsgemäßen Deckels,
- Figur 4 eine vergrößerte Ansicht eines Teils des beim erfindungsgemäßen Schiebehebedach-Moduls verwendeten Justiermechanismus, und
- Figur 5 eine Querschnittsansicht durch das erfindungsgemäße Schiebehebedachmodul gemäß einer zweiten Ausführungsform im Bereich der Längsführung.

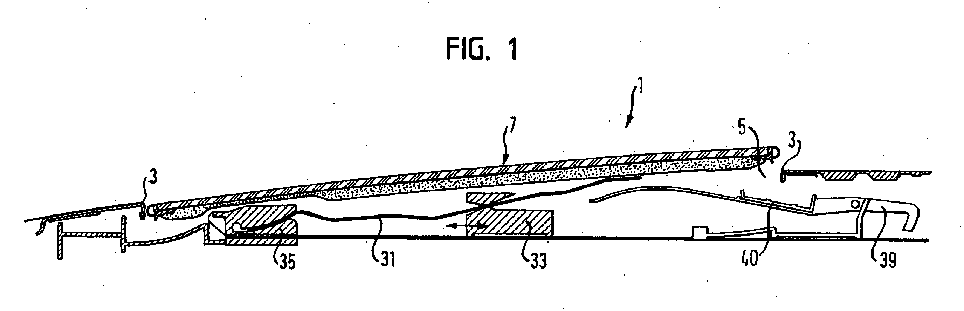

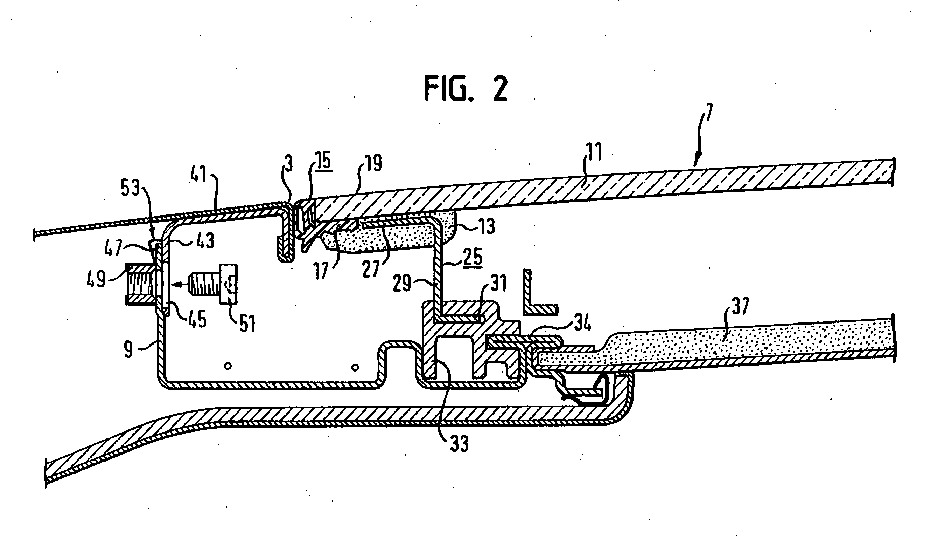

In Figur 1 ist ein Schiebehebedach-Modul 1 im Längsschnitt dargestellt. Mit 3 ist der Rand der Fahrzeugdachöffnung 5 bezeichnet. Das Schiebehebedach-Modul weist einen verfahrbaren Deckel 7, einen später noch näher erläuterten Verstellmechanismus und einen Führungsrahmen 9 (s. Figur 2) auf, der am Dach zu befestigen ist.

Der Deckel 7 umfaßt ein großflächiges, die Fahrzeugaußenhaut im geschlossenen Zustand definierendes Paneel 11 aus Glas, Kunststoff oder Blech. Rückseitig ist das Paneel 11 hinterschäumt, wobei die Hinterschäumung mit dem Bezugszeichen 13 versehen ist. Am Rand des Paneels 11 verläuft eine Deckeldichtung 15, die einen flanschartigen Abschnitt 17 aufweist, der rückseitig am Paneel 11 anliegt und durch die Hinterschäumung 13 mit dem Paneel 11 verbunden ist.

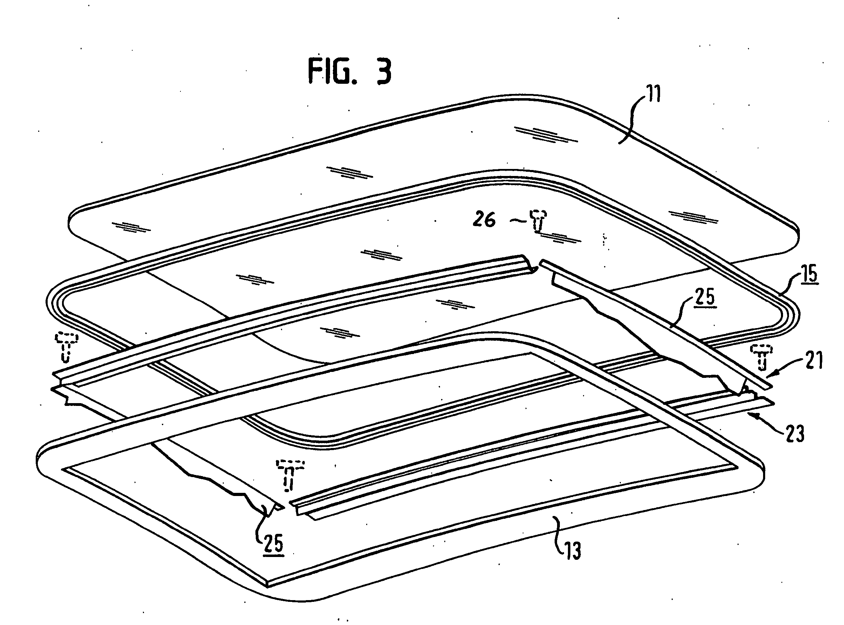

Zur Stabilisierung des Deckels 7 besitzt dieser integrierte, am Deckelrand 19 verlaufende Verstärkungen 21, die sich zu einem unterbrochenen Rahmen ergänzen, der auch in Figur 3 gut zu erkennen ist. Der unterbrochene Rahmen besteht im wesentlichen aus vier Teilen, nämlich zwei am vorderen und hinteren Deckelrand 19 quer zur Fahrzeuglängsrichtung verlaufende Querstreben 23 und zwei an gegenüberliegenden seitlichen Deckelrändern 19 verlaufende Längsführungen in Form von Kulissenteilen 25. Die Querstreben 23 können auch an den Kulissenteilen 25 befestigt sein, wie mit den Bolzen 26 angedeutet, so daß ein geschlossen umlaufender Rahmen entsteht. Die Kulissenteile 25 sind Stanz-Prägeteile vorzugsweise ohne schwächende Durchbrüche oder dergleichen. Im in Figur 2 gezeigten Querschnitt gesehen hat das einstückige Kulissenteil 25 eine umgekehrt "Z"-förmige Gestalt, wobei der obere, horizontale Flansch 27 sowie ein Teil des vertikalen Verbindungssteges 29 in die Hinterschäumung 13 eingebettet sind. Dieser eingebettete Abschnitt wird als erster Abschnitt bezeichnet. Mittels dieser Einbettung ist das Kulissenteil 25 integraler Bestandteil des Deckels 7 und mit dem Paneel 11 verbunden, ohne daß zusätzliche Schraubverbindungen oder dergleichen vorhanden sein müssen.

Der untere Flansch 31 des Kulissenteils 25 ist in einer schlitzförmigen Aufnahme eines hinteren Gleiters 33 längsverschieblich gelagert, wobei der Gleiter 33 ein Verschiebeteil bildet. Der aus der Hinterschäumung 13 herausragende Teil des Verbindungsstegs 29 und der Flansch 31 werden als zweiter Abschnitt bezeichnet, wobei erster und zweiter Abschnitt integral ausgebildet sind.

Der Gleiter 33 ist wiederum in einer Führung 34 des Führungsrahmens 9 längsverschieblich gelagert. Das vordere Ende des Flansches 31 ist in einem zweiten Gleiter 35 aufgenommen.

Mit 37 ist der Sonnenschutz und mit 39 ist ein Verrastsystem mit integriertem Ausstellhebel zum Ausstellen der Wasserrinne 40 bezeichnet.

Die beiden parallelen Kulissenteile 25, genauer gesagt ihre jeweils zweiten Abschnitte, bilden zwei parallele Längsführungen des Deckels 7. Der Flansch 31 definiert eine Kulissenbahn, deren Verlauf in Figur 1 deutlich zu erkennen ist. Der Gleiter 33, der in Figur 1 ebenfalls dargestellt ist, kann in Fahrzeuglängsrichtung verfahren werden, um den Deckel 7 am hinteren Ende anzuheben (Gleiter 33 bewegt sich nach vorne) oder abzusenken (Gleiter 33 bewegt sich nach hinten).

Die übrigen Teile des Verstellmechanismus, z.B. zum horizontalen Verfahren des Deckels, sind im Stand der Technik bekannt und müssen hier nicht explizit erläutert werden.

Das Besondere des Glasdeckels 7 ist dessen einfacher Aufbau, der Figur 3 entnommen werden kann, denn die Längsführung für den Deckel 7 ist zugleich die Verstärkung 21 des Deckels 7. Die Querstreben 23 und die Kulissenteile 25 sind komplett bzw. abschnittsweise in die Hinterschäumung 13 integriert, so daß der Deckel 7 einfach und kostengünstig hergestellt und das spätere Anschrauben von Kulissenteilen oder Längsführungen entfallen kann.

Die die Längsführungen des Deckels 7 bildenden Kulissenteile 25 können alternativ oder zusätzlich zur Einlagerung in die Hinterschäumung 13 unmittelbar am Paneel 11 des Deckels 7 befestigt sein. Dies kann wie eingangs erwähnt durch Kleben, Thermovernieten, Umspritzen, Schrauben oder Clipsen erfolgen.

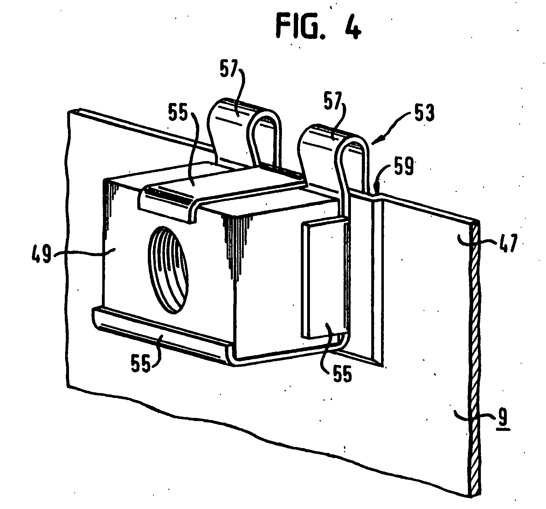

Da die Kulissenteile 25 starr mit dem Paneel 11 gekoppelt sind, ist eine schnelle und wirksame Justage des Schiebehebedach-Moduls beim Einbau erforderlich. Diese Justage erfolgt über einen Justiermechanismus des Führungsrahmens 9, der besonders einfach ausgeführt ist. Der Führungsrahmen 9 wird an einem rückseitig am Dachblech 41 angebrachten, umlaufenden Verstärkungsrahmen 43 angeschraubt. Der Verstärkungsrahmen 43 hat ein übergroßes oder sogar ein Langloch 45, welches mit einer am Rand 47 des Führungsrahmens 9 befestigten Mutter 49 fluchtet. Der Durchmesser des Loches ist mehr als 1 mm größer als der Gewindedurchmesser der Schraube. Die Mutter 49 ist Teil des Justiermechanismus und wirkt mit einer Schraube 51 zusammen, die von Seiten des Verstärkungsrahmens 43 aus durch das Loch 45 gesteckt und in die Mutter 49 eingedreht wird. Zum Justiermechanismus gehört auch eine Klammer 53, die in Figur 4 deutlicher zu erkennen ist. Die Klammer 53 hat zwei verschiedene Abschnitte, nämlich einen Abschnitt mit zahlreichen Haltearmen 55, die die rechteckige Mutter 49 formschlüssig erfassen und zwei umgebogene Klemmfinger 57. Mit den Klemmfingern 57 wird die Klammer 53 von oben einfach auf den Rand 47 aufgesteckt, wobei die Steckverbindung zugleich eine drehfeste Kopplung der Mutter am Führungsrahmen 9 schafft. Ein längs des seitlichen Randes der Klemmfinger 57 verlaufender Versatz 59 im Führungsrahmen 9 sichert die Mutter 49 samt Klammer 53 gegen Verdrehen, wenn die Schraube 51 in die Mutter 49 eingedreht wird. Eine zusätzliche oder alternative Verdrehsicherung wird erreicht, indem die Klammer so weit auf den Rand gesteckt wird, bis die Klemmfinger am oberen Randabschluß des Rahmens anliegen.

Der gezeigte Justiermechanismus kann auch zur Justage anderer Teile eines Fahrzeugdaches, insbesondere auch eines gesamten Dachmodules verwendet werden.

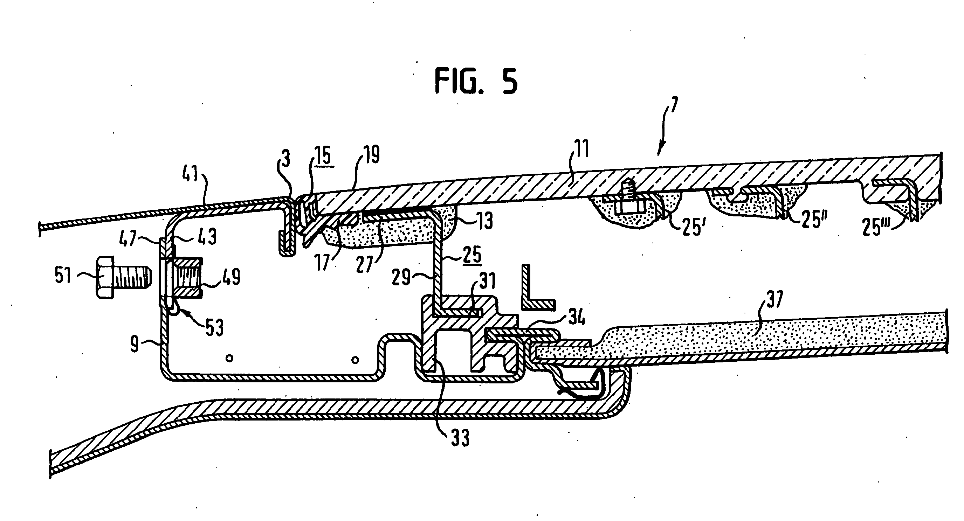

Die Ausführungsform nach Figur 5 zeigt verschiedene Varianten der Befestigung des Kulissenteils 25 am Paneel 11. Die linke Ausführungsform sieht vor, daß das Kulissenteil 25 rückseitig unmittelbar auf das Paneel 11 geklebt und anschließend teilweise umschäumt wird. Paneel und Kulissenteil 25 bilden also eine vorgefertigte Einheit. Anstatt der Klebeverbindung können auch noch andere Verbindungsarten vorgesehen sein, nämlich, wie anhand des oberen Abschnittes des Kulissenteils 25' gezeigt, eine Schraubverbindung. Darüber hinaus ist auch eine Thermovernietung (siehe Kulissenteil 25") oder eine Umspritzung und damit Einbettung des Kulissenteils 25"' in das Paneel 11 angedacht. Auch eine Rastverbindung oder andere herkömmliche Verbindungsarten können zur unmittelbaren Befestigung des Kulissenteils 25 oder, allgemeiner gesagt der Führung, am Paneel 11 dienen.

Geändert zur Ausführungsform nach Figur 2 ist auch die Befestigung der Mutter 49 samt Klammer 53, die gemäß Figur 5 auf den Rand des dachseitigen Verstärkungsrahmens 43 aufgeschoben wurde. Dies ermöglicht es, die Schraube 51 von außen einzudrehen, also von einer leichter zugänglichen Seite des Verstärkungsrahmens 43.

## Patentansprüche

1. Verfahrbarer Deckel zum Schließen einer Fahrzeugdachöffnung (5), mit
einem großflächigen Paneel (11), das rückseitig eine Hinterschäumung (13) aufweist,
**gekennzeichnet durch**
eine Führung zum Verstellen des Deckels (7), die in die Hinterschäumung (13) eingebettet und **dadurch** mit dem Paneel (11) verbunden ist, wobei ein erster Abschnitt der Führung in die Hinterschäumung (13) eingebettet und ein mit dem ersten Abschnitt einstückig verbundener zweiter Abschnitt aus der Hinterschäumung (13) herausragt.

2. Verfahrbarer Deckel zum Schließen einer Fahrzeugdachöffnung (5) nach Anspruch 1, **dadurch gekennzeichnet, daß** die Führung rückseitig unmittelbar das Paneel (11) kontaktiert und insbesondere mit ihm verbunden ist.

3. Deckel nach Anspruch 2, **dadurch gekennzeichnet, daß** die Führung durch Kleben, Thermovernieten, Umspritzen, Schrauben oder Clipsen unmittelbar mit dem Paneel (11) verbunden ist.

4. Deckel nach einem der vorhergehenden Ansprüche, **dadurch gekennzeichnet, daß** die Führung eine Längsführung ist.

5. Deckel nach Anspruch 4, **dadurch gekennzeichnet, daß** der zweite Abschnitt der Längsführung ein eine Bahn aufweisendes Kulissenteil (25) ist, das mit einem längs der Bahn beweglichen Verschiebeteil in Eingriff steht.

6. Deckel nach Anspruch 4, **dadurch gekennzeichnet, daß** der zweite Abschnitt der Längsführung ein Verschiebeteil ist, das in ein eine Bahn aufweisendes Kulissenteil eingreift und längs der Bahn relativ zum Kulissenteil verschiebbar ist.

7. Deckel nach einem der vorhergehenden Ansprüche, **dadurch gekennzeichnet, daß** an den Seiten des Deckels (7) zwei Führungen in Form von Längsführungen vorgesehen sind, die allein oder mit anderen deckelintegrierten Teilen eine Verstärkung des Deckels (7) bilden.

8. Deckel nach einem der vorhergehenden Ansprüche, **dadurch gekennzeichnet, daß** die Führung eine Längsführung ist, die Teil eines in den Deckel (7) integrierten, längs des Deckelrandes (19) verlaufenden Rahmens ist.

9. Deckel nach Anspruch 8, **dadurch gekennzeichnet, daß** der Rahmen geschlossen umlaufend ausgeführt ist.

10. Deckel nach Anspruch 8 oder 9 , **dadurch gekennzeichnet, daß** der Rahmen (21) zwei an den Seitenrändern des Paneels (7) verlaufende Längsführungen und wenigstens zwei quer zu den Längsführungen verlaufende Querstreben (23) hat.

11. Schiebehebedach-Modul, mit
einem Deckel (7) nach einem der vorhergehenden Ansprüche und
einem am Fahrzeugdach stationär zu befestigenden Führungsrahmen (9),
und einem dachseitigen Verstärkungsrahmen (43),
**gekennzeichnet durch** einen Justiermechanismus, mit einer Schrauben-Mutternverbindung, wobei Schraube (51) oder Mutter (49) am Führungsrahmen (9) oder Verstärkungsrahmen (43) **durch** eine Steckverbindung drehfest angebracht ist.

12. Schiebehebedach-Modul nach Anspruch 11, **dadurch gekennzeichnet, daß** die Schraube (51) oder die Mutter (49) in einer Klammer (53) aufgenommen ist.

13. Schiebehebedach-Modul nach Anspruch 12, **dadurch gekennzeichnet, daß** die Klammer (53) den Rand (47) des Führungsrahmens (9) oder Verstärkungsrahmens (43) umgreift.

14. Schiebehebedach-Modul nach Anspruch 12, **dadurch gekennzeichnet, daß** der Rand (47) des Führungsrahmens (9) oder Verstärkungsrahmens (43) einen an die Klammer (53) angrenzenden Versatz (59) aufweist, der ein Verdrehen der Klammer (53) verhindert.

15. Schiebehebedach-Modul nach einem der Ansprüche 11 bis 14, **dadurch gekennzeichnet, daß** bei Vorsehen der Steckverbindung am Führungsrahmen (9) der Verstärkungsrahmen (43) ein Loch (45) zur Durchführung der Schraube (51) aufweist, dessen Durchmesser mindestens 1 mm größer als der Gewindedurchmesser der Schraube (51) ist, und daß, umgekehrt, bei Vorsehen der Steckverbindung am Verstärkungsrahmen (43) das entsprechend große Loch (45) im Führungsrahmen (9) vorgesehen ist.

## Claims

1. A displaceable cover for closing a vehicle roof opening (5), comprising
a large-surface panel (11) which has a foamed backing (13) on the rear side,
**characterized by**
a guide for adjusting the cover (7), the guide being embedded in the foamed backing (13) and thereby being connected with the panel (11), a first section of the guide being embedded in the foamed backing (13), and a second section which is connected in one piece with the first section projecting out of the foamed backing (13).

2. The displaceable cover for closing a vehicle roof opening (5) according to claim 1, **characterized in that** the guide is in direct contact with the rear side of the panel (11) and, in particular, is connected with the panel.

3. The cover according to claim 2, **characterized in that** the guide is directly connected with the panel (11) by gluing, thermo-riveting, insert molding, screwing or clipping on.

4. The cover according to any of the preceding claims, **characterized in that** the guide is a longitudinal guide.

5. The cover according to claim 4, **characterized in that** the second section of the longitudinal guide is a slide guide part (25) which has a race and is in engagement with a shifting part that can be moved along the race.

6. The cover according to claim 4, **characterized in that** the second section of the longitudinal guide is a shifting part which engages in a slide guide part which has a race and can be shifted along the race relative to the slide guide part.

7. The cover according to any of the preceding claims, **characterized in that** provided on the sides of the cover (7) are two guides in the form of longitudinal guides which, alone or together with other parts integrated in the cover, form a reinforcement of the cover (7).

8. The cover according to any of the preceding claims, **characterized in that** the guide is a longitudinal guide which is part of a frame that is integrated in the cover (7) and extends along the edge (19) of the cover.

9. The cover according to claim 8, **characterized in that** the frame is designed so as to be circumferentially closed.

10. The cover according to claim 8 or 9, **characterized in that** the frame (21) has two longitudinal guides which extend on the side edges of the panel (7) and at least two transverse braces (23) which extend transversely to the longitudinal guides.

11. A slide-tilt roof module comprising
a cover (7) according to any of the preceding claims, and
a guide frame (9) to be immovably fastened to the vehicle roof,
and a reinforcement frame (43) on the roof side,
**characterized by** an adjustment mechanism including a nut-and-bolt connection, the bolt (51) or the nut (49) being non-rotatably fitted to the guide frame (9) or the reinforcement frame (43) by means of a plug connection.

12. The slide-tilt roof module according to claim 11, **characterized in that** the bolt (51) or the nut (49) is received in a clamp (53).

13. The slide-tilt roof module according to claim 12, **characterized in that** the clamp (53) engages around the edge (47) of the guide frame (9) or the reinforcement frame (43).

14. The slide-tilt roof module according to claim 12, **characterized in that** the edge (47) of the guide frame (9) or of the reinforcement frame (43) has a step (59) which is adjacent to the clamp (53) and prevents the clamp (53) from turning.

15. The slide-tilt roof module according to any of claims 11 to 14, **characterized in that** in the case of providing the plug connection on the guide frame (9), the reinforcement frame (43) has a hole (45) for inserting the bolt (51), the diameter of the hole (45) being at least 1 mm larger than the thread diameter of the bolt (51), and **in that**, vice versa, in the case of providing the plug connection on the reinforcement frame (43), the hole (45) having the appropriate size is provided in the guide frame (9).

## Revendications

1. Couvercle déplaçable pour fermer une ouverture (5) de toit de véhicule, comportant:
un panneau (11) à grande surface, présentant sur son côté postérieur un surmoulage par moussage (13),
**caractérisé par**
un guidage pour le déplacement du couvercle (7), qui est noyé dans le surmoulage par moussage (13) et qui est ainsi relié au panneau (11), un premier tronçon du guidage étant noyé dans le surmoulage par moussage (13) et un deuxième tronçon, relié d'un seul tenant au premier tronçon, faisant saillie hors du surmoulage par moussage (13).

2. Couvercle déplaçable pour fermer une ouverture (5) de toit de véhicule selon la revendication 1, **caractérisé en ce que** le guidage est en contact direct avec le côté postérieur du panneau (11) et est en particulier relié à celui-ci.

3. Couvercle selon la revendication 2, **caractérisé en ce que** le guidage est relié directement au panneau (11) par collage, thermo-rivetage, enrobage par injection, vissage ou clipsage.

4. Couvercle selon l'une des revendications précédentes, **caractérisé en ce que** le guidage est un guidage longitudinal.

5. Couvercle selon la revendication 4, **caractérisé en ce que** le deuxième tronçon du guidage longitudinal est une pièce à coulisse (25) qui présente une glissière et qui est en prise avec une pièce de décalage mobile le long de la glissière.

6. Couvercle selon la revendication 4, **caractérisé en ce que** le deuxième tronçon du guidage longitudinal est une pièce de décalage qui s'engage dans une pièce à coulisse présentant une glissière, et qui peut être décalée le long de la glissière par rapport à la pièce à coulisse.

7. Couvercle selon l'une des revendications précédentes, **caractérisé en ce qu'**il est prévu sur les côtés du couvercle (7) deux guidages en forme de guidages longitudinaux qui, seuls ou avec d'autres pièces intégrées dans le couvercle, forment un renforcement du couvercle (7).

8. Couvercle selon l'une des revendications précédentes, **caractérisé en ce que** le guidage est un guidage longitudinal qui fait partie d'un cadre intégré dans le couvercle (7) et s'étendant le long du bord (19) du couvercle.

9. Couvercle selon la revendication 8, **caractérisé en ce que** le cadre est réalisé de manière à être circonférentiellement fermé.

10. Couvercle selon la revendication 8 ou 9, **caractérisé en ce que** le cadre (21) présente deux guidages longitudinaux s'étendant le long des bords latéraux du panneau (7), et au moins deux traverses (23) s'étendant transversalement par rapport aux guidages longitudinaux.

11. Module de toit coulissant-basculant, comprenant
un couvercle (7) selon l'une des revendications précédentes et
un cadre de guidage (9) à fixer de manière stationnaire sur le toit de véhicule,
ainsi qu'un cadre de renforcement (43) du côté du toit,
**caractérisé par** un mécanisme d'ajustage présentant une liaison à vis et écrou, la vis (51) ou l'écrou (49) étant monté(e) sur le cadre de guidage (9) ou sur le cadre de renforcement (43) au moyen d'une liaison par enfichage de manière à être immobile en rotation.

12. Module de toit coulissant-basculant selon la revendication 11, **caractérisé en ce que** la vis (51) ou l'écrou (49) est reçu(e) dans une pince (53).

13. Module de toit coulissant-basculant selon la revendication 12, **caractérisé en ce que** la pince (53) enserre le bord (47) du cadre de guidage (9) ou du cadre de renforcement (43).

14. Module de toit coulissant-basculant selon la revendication 12, **caractérisé en ce que** le bord (47) du cadre de guidage (9) ou du cadre de renforcement (43) comporte un déport (59) qui est adjacent à la pince (53) et qui empêche une rotation de la pince (53).

15. Module de toit coulissant-basculant selon l'une des revendications 11 à 14, **caractérisé en ce que** lorsque la liaison par enfichage est prévue sur le cadre de guidage (9), le cadre de renforcement (43) présente un trou (45) pour le passage de la vis (51), dont le diamètre est au moins 1 mm plus grand que le diamètre du filetage de la vis (51), et **en ce qu'**à l'inverse, lorsque la liaison par enfichage est prévue sur le cadre de renforcement (43), le trou (45) de taille correspondante est prévu sur le cadre de guidage (9).
